# EUROPEAN PATENT APPLICATION

(11) **EP 2 204 435 A1**
(43) Date of publication of application: **07.07.2010**
(21) Application number: 08173044.2
(22) Date of filing: 29.12.2008
(51) Int. Cl.: C10L 1/32, C02F 11/06, F23G 7/00, F23G 7/05, F23K 5/12

(54) **Method of production of emulsified fuel from sewage sludge**

(30) Priority: 25.11.2008 PL 38659708
(71) Applicant: Politechnika Lubelska, 20-219 Lublin (PL)
(72) Inventor: Pawlowska, Malgorzata, 20-710 Lublin (PL); Pawlowski, Lucjan, 20-710 Lublin (PL); Montusiewicz, Agnieszka, 20-601 Lublin (PL)
(74) Representative: Kaminski, Piotr

(57) **Abstract**

Method for production of emulsified fuel from sewage sludge is **characterised in that** the sewage sludge is mixed in ratio of 1:1 with used motor oil, 2% of nonionic surfactant is added and the mixture is emulsified by means of high speed rotary stirrer.

## Description

The subject of the present invention is a method for production of emulsified fuel from sewage sludge.

Sewage sludge management poses a serious problem. Direct storage of sewage sludge would be impossible due to too high a content of organic matter. On the other hand its use in agriculture is often impossible because of too high a content of heavy metals.

One of the known methods is burning in rotary cement kiln. However, waste introduction with feed from the cold end results in pyrolysis in the calcinations zone, and because of small amount of air - for calcinations zone is located already outside the burning zone - these gases may not be burnt. Introducing the sludge from the hot end, in mixture with fine coal, is possible only when the sludge is first dried to have dry mass content of above 90% - it can then be milled along with coal in mills.

In majority of methods of use of sewage sludge as fuel, the sewage sludge is first subjected to gasification and then the gas is fed for burning in cement kiln. According to patent WO2007066191 the sludge is subjected to pressure >25 bar, heated to temperature >150°C, preferably by means of microwaves, in presence of homogenic catalysts selected from alkaline metals or heterogenic catalysts that is α-Al₂O₃, zeolites and Fe, Ni, Cu, Co, Cr, W, Mn, Mo, V, Sn, Zn or Si compounds. In these conditions organic compounds are decomposed to pyrolysis gases, which are utilized for energy purposes. In Japanese patent JP2007056113 heated sludge is subjected to partial oxidation by use of air. The temperature increased in this manner causes pyrolysis of organic compounds of the sludge. Similar gasification is carried out in accordance with patent EP 1888718, where along with air steam is also forced. Japanese patent 2004292540 presents a device consisting of a reactor, in which in its lower part, with access of oxygen from air, burning of organic compounds contained in sludge occurs; the hot gases directed to upper part of fresh sludge cause pyrolysis of organic compounds contained therein.

The drawback of these solutions is that following the process of pyrolysis there remains quick coke, which in case of gasification of sewage sludge containing heavy metals, has to specially managed.

The essence of method for production of emulsified fuel from sewage sludge is that the sewage sludge is mixed in ratio of 1:1 with used motor oil, 2% of nonionic surfactant is added and the mixture is emulsified by means of high speed rotary stirrer. So obtained mixture is delivered by a pump to burner located in the sintering zone.

Beneficial effect of the method according to invention is that so prepared sewage sludge can be directly delivered to kiln, where organic compounds contained in the mixture, including heavy metals are permanently immobilised in clinker.

### Example.

Sewage sludge of dry mass content of 20% and gross calorific value of 4,5 MJ/kg was mixed with used motor oil of gross calorific value of 30Mg/kg in ratio of 1:1 and 2% of nonionic surfactant - Rokafenol N8 - was added. Next the mixture was emulsified by means of high speed rotary stirrer. Obtained emulsion having gross calorific value of 23,8 MG/kg was delivered by pump to burning zone of the cement kiln.

## Claims

1. Method for production of emulsified fuel from sewage sludge **characterised in that** the sewage sludge is mixed in ratio of 1:1 with used motor oil, 2% of nonionic surfactant is added and the mixture is emulsified by means of high speed rotary stirrer.
